# EUROPÄISCHE PATENTSCHRIFT

(11) **EP 1 623 361 B1**
(45) Veröffentlichungstag und Bekanntmachung des Hinweises auf die Patenterteilung: **10.05.2017**
(21) Anmeldenummer: 04722560.2
(22) Anmeldetag: 23.03.2004
(51) Int. Cl.: G06K 13/08

(54) **KARTENAUFNAHMEVORRICHTUNG**
CARD HOLDING DEVICE
DISPOSITIF DE RECEPTION DE CARTE

(30) Priorität: 12.05.2003 DE 10321252
(43) Veröffentlichungstag der Anmeldung: 08.02.2006
(73) Patentinhaber: Continental Automotive GmbH, 30165 Hannover (DE)
(72) Erfinder: HAUTVAST, Heinz-Josef, 78086 Brigachtal (DE); RIESTER, Thomas, 78052 Villingen-Schwenningen (DE); WAHLER, Torsten, 78073 Bad Dürrheim (DE)
(86) Internationale Anmeldenummer: PCT/EP2004/003081
(87) Internationale Veröffentlichungsnummer: WO 2004/100055

(56) Entgegenhaltungen:
- EP-A- 0 351 103
- EP-A- 0 468 145
- EP-A- 1 118 958
- DE-A- 3 931 508
- US-A- 5 912 446

## Beschreibung

Die Erfindung betrifft eine Kartenaufnahmevorrichtung mit mindestens einer Führung und mit einer Klemmeinheit mit mindestens einem ersten Klemmelement, welche Klemmeinheit eine aufzunehmende Karte mit zwei sich gegenüberliegenden Flachseiten an einer Flachseite bei einer Relativbewegung der Klemmeinheit zu der mindestens einen Führung von der mindestens einen Führung gesteuert klemmt, wobei die Klemmeinheit mindestens ein erstes elastisches Element mit einem ersten Bereich und einem zweiten Bereich aufweist, welches mittelbar oder unmittelbar an dem mindestens ersten Bereich mittels der mindestens einen Führung geführt ist und mittelbar oder unmittelbar die Karte mittels des mindestens einen zweiten Bereichs klemmt. Daneben ist ein Verfahren zur Aufnahme einer Karte in einer Kartenaufnahmevorrichtung, insbesondere in eine erfindungsgemäße Kartenaufnahmevorrichtung Gegenstand der Erfindung.

Der Schwerpunkt der Anwendung der erfindungsgemäßen Vorrichtung und des Verfahrens liegt im Bereich von Fahrtenschreibern oder bzw. Vorrichtungen zur Erfassung der Arbeitszeiten und Ruhezeiten von Nutzfahrzeugfahrern. Andere Anwendungen sind jedoch ebenfalls denkbar, z. B. im Bereich des Bank- und Zahlungswesens oder bei Schließsystemen. Vorteilhafte Anwendung findet die Erfindung in Kombination mit allen Arten von kartenförmigen Datenträgern. Aufgrund der hohen wirtschaftlichen und rechtlichen Bedeutung der zu erfassenden Daten bei Fahrtenschreibern, müssen die Aufzeichnungen zuverlässig gegen Manipulationen gesichert werden. Die Sicherungsmaßnahmen betreffen sowohl die Datenerfassung und Datenübertragung als auch die Übertragung und Speicherung der erfassten Daten im Speicher der Karte. Einschlägige Normen stellen strenge Anforderungen an den durch die Maßnahmen zu erreichenden Sicherheitsstandard. So ist vorgeschrieben, dass die Karte während der Lese- und Schreibvorgänge vollständig von der Kartenaufnahmevorrichtung aufgenommen ist und gegen die Umwelt mittels geeigneter Verschlussvorrichtungen isoliert ist. Die Verschlussvorrichtungen müssen in der Geschlossen- Stellung während der Lese- und Schreibvorgänge arretiert sein. Zusätzliche Schwierigkeiten ergeben sich insbesondere bei Fahrtenschreibern aufgrund durch Verschmutzung bedingter Funktionsausfälle herkömmlicher Vorrichtungen, insbesondere wegen Kontaktunterbrechungen oder sogar beim Einzug der Karte. Der Einzug und die exakte Positionierung der Karte an den Kontakten der Vorrichtung sind problematisch, weil die verschiedenen Karten im Verhältnis zu der erforderlichen Positionsgenauigkeit zu den Kontakten der Vorrichtung hohe Fertigungstoleranzen aufweisen. Da die Karten sich in der Wahrnehmung des Benutzers vor allem durch eine hohe Robustizität auszeichnen, werden diese in der Regel nicht mit der eigentlich erforderlichen Sorgfalt behandelt, so dass zusätzlich zu den durch die Fertigung bedingten Toleranzen Verformungen und Beschädigungen die Funktionsweise im Zusammenspiel mit den Kartenaufnahmevorrichtungen beeinträchtigen. Darüber hinaus stellen die Betriebsbedingungen in Kraftfahrzeugen erhöhte Anforderungen an die Funktionssicherheit aufgrund der starken Schwingungen und unzähligen Stöße sowie der weitreichenden Temperaturschwankungen. Die Realisierung der Manipulationssicherheit und der gewünschte Komfort bei der Handhabung machen einen vollautomatischen Karteneinzug erforderlich. Diesem Erfordernis nachzukommen stellt die Konstruktion jedoch vor große Schwierigkeiten, weil der zur Verfügung stehende Bauraum in einem Fahrtenschreiber in der Größe eines Autoradios nur etwa eine Höhe von 10 mm für den vollautomatischen Einzug bereitstellt.

Aus der DP 102 08 259.6 ist bereits eine Chipkarten-Aufnahmevorrichtung der vollautomatischen Bauart bekannt, bei der zwei Spannelemente auf einem Schlitten gefedert gelagert sind, die die eingegebene Chipkarte zangenartig greifen und in eine Lese-/Schreibposition transportieren.

Es hat sich jedoch gezeigt, dass der prinzipiell richtige Ansatz des Greifens der Chipkarte mittels zweier Spannelemente zusätzliche Probleme aufwirft. Je nach Verformung der eingegebenen Karte und abhängig von der in dem Toleranzfeld befindlichen Stärke der Karte kommt es vor, dass der zwischen der Karte und den Spannelementen erfolgende Kraftschluss einer ungünstigen Bedienung des Gerätes, beispielsweise durch Festhalten der Karte, nicht gewachsen ist.

Aus der Europäischen Patentanmeldung EP 0 351 103 A2 ist bereits eine Anordnung der eingangs genannten Art bekannt, deren Klemmvorrichtung eine manuelle Eingabe zwingend erfordert und für ein automatisches Einziehen der Karte ungeeignet ist, weil die Anfälligkeit für Fehlpositionierungen bei ungeschickter Karteneingabe zu hoch wäre. Aus der Europäischen Patentanmeldung EP 1 118 958 A1 ist eine Anordnung bekannt, bei der eine Chipkarte gegen Federkraft in ein Lesegerät eingeschoben wird und an Vorsprüngen gegen einen federkraftgetriebenen Auswurf der Karte eingangsseitig blockiert wird. Ebenfalls einer manuellen Eingabe bedient sich die Anordnung nach dem US-Patent US 5,912,446, welche vorsieht, dass ein beweglicher Schlitten die Chipkarte während der manuell getriebenen Einschubbewegung an die Auslesekontakte andrückt. Diese Anordnungen sind jeweils nicht für einen automatischen Einzug geeignet. Eine Vorrichtung zum automatischen Einzug einer Chipkarte zeigt die Europäische Patentanmeldung EP 0 468 145 A1, wobei insbesondere die angedeutete Einrichtung zum Festklemmen der Karte während des automatischen Einzuges auf Grund der raumgreifenden Gestaltung für eine Flachbauweise nicht geeignet ist.

Ausgehend von den Problemen und Nachteilen des Standes der Technik hat es sich die Erfindung zur Aufgabe gemacht, eine Kartenaufnahmevorrichtung und ein Verfahren zur Aufnahme einer Karte zu schaffen, welche in der Lage ist, unter den beschriebenen ungünstigen Randbedingungen eine Karte auch bei ungeeigneter Bedienung des Gerätes zuverlässig einzuziehen und an die Endposition für den Lese-/Schreibvorgang zu transportieren.

Erfindungsgemäß wird die Aufgabe durch eine Kartenaufnahmevorrichtung der eingangs genannten Art mit den Merkmalen des Anspruchs 1 gelöst. Daneben wird zur Lösung der Aufgabe Verfahren nach Ansprüche 17 bis 19 vorgeschlagen. Die jeweiligen Unteransprüche beinhalten vorteilhafte Weiterbildungen der Erfindung.

Die erfindungsgemäße Verwendung eines elastischen Elements in der Klemmeinheit einer Kartenaufnahmevorrichtung ermöglicht die Verwirklichung sich widerstrebender Ziele, nämlich ein sicheres Festklemmen und Transportieren der aufzunehmenden Karte bei hohem Verformungs- und Verschmutzungsgrad dank verhältnismäßig hoher Klemmkraft bei gleichzeitig maximaler Toleranz gegenüber Fehlbedienungen. Gegenüber den bisher üblichen Gummiwalzen-Transportsystemen, die stets einen hohen Bauraumbedarf haben, da die Gummiwalzen zur Funktionssicherung einen gewissen Mindestdurchmessers bedürfen, kann erfindungsgemäß eine äußerst flache Bauform verwirklicht werden. Mit der erfindungsgemäßen Anordnung kann außerdem die aufzunehmende Karte beliebig weit in die Vorrichtung eingezogen werden, ohne, wie beim Gummiwalzen-Transport mehrere Walzen hintereinander anordnen zu müssen. Das Steuern der von dem elastischen Element ausgehenden Klemmkraft mittels der Führung ermöglich ein bedarfsgerechtes Variieren der Klemmkraft an der Chipkarte, so kann beispielsweise während die Karte noch von außen zugänglich ist eine maximale Anpresskraft vorgesehen sein und anschließend in dem Gerät die Klemmkraft reduziert werden.

Eine vorteilhafte Weiterbildung der Erfindung sieht vor, dass das elastische Element als Teil eines ersten Klemmelements ausgebildet ist und mit einem ersten Bereich mittels der mindestens einen Führung geführt ist und die Karte mittels eines zweiten Bereichs in Zusammenwirken mit dem zweiten Klemmelement klemmt. Diese Anordnung vereint zweckmäßig die Funktion des elastischen Elements mit der Funktion eines Klemmelements, so dass der Aufbau der Vorrichtung weniger kompliziert ist, die Anzahl der Bauteile sich reduziert, der Monateaufwand verringert wird und die Störanfälligkeit abnimmt.

Daneben kann insbesondere die Bauhöhe der Vorrichtung verringert werden, da sich das elastische Element und dass mit dem elastischen Element vereinte Klemmelement sonst in Höhenrichtung neben der aufzunehmenden Karte, bzw. dem Kartenschacht befinden.
Eine verbesserte Präzision des Kraftschlusses wird erreicht, wenn die Klemmeinheit mindestens ein zweites Klemmelement aufweist, der zweite Bereichs des elastischen Elements das erste Klemmelement berührt und während des Klemmvorgangs so
gegen die Karte drückt, dass das erste Klemmelement gemeinsam mit dem zweiten Klemmelement eine aufzunehmende Karte an den zwei gegenüberliegenden Flachseiten klemmt. Da in dieser Ausführungsform die Funktion des elastischen Elements von derjenigen des Klemmelements getrennt ist, können beide Bauteile besser an die ihnen obliegenden Aufgaben angepasst werden und der Einzugsvorgang kann noch präziser verwirklicht werden.

Zweckmäßig kann die Bewegung der Klemmeinheit auch für die erfindungsgemäße Klemmung genutzt werden, wenn bei einer Bewegung der Klemmeinheit in einer Einwärtsrichtung der Kartenaufnahmevorrichtung die Klemmeinheit die Karte gesteuert von der Führung klemmt. Auf diese Weise kann vorteilhaft ein einzelner Antrieb zum Transport der Klemmeinheit in Einwärtsrichtung auch das Klemmen der Karte in der Klemmeinheit antreiben.

Sehr flache Bauformen und hohe Klemmkräfte lassen sich verwirklichen, wenn das elastische Element als Blattfeder ausgeführt ist. Ebenso denkbar ist die Verwendung einer Stabfeder oder Schenkelfeder. In diesem Zusammenhang sieht eine vorteilhafte Weiterbildung vor, dass die Blattfeder an einem Ende in einer Drehachse drehbar gelagert ist, der erste Bereich, an der die Blattfeder mittels der Führung geführt ist, an dem gegenüberliegenden Ende angeordnet ist und der zweite Bereich nahe der Drehachse angeordnet ist. Die Drehachse muss hier bei der Drehung um einen in der Regel nur kleinen Verdrehwinkel nicht raumfest sein. Dies ist vor allem dann der Fall, wenn die Blattfeder in dem Bereich nicht in einer bestimmten Achse drehbar gelagert ist sondern dort vereinfachend nur in Richtung der Karte niedergehalten wird. Eine Steigerung der mittels einer Blattfeder erzielten Klemmkräfte führt zu erhöhten Reibkräften des elastischen Elements, bzw. der Blattfeder in der die Vorspannkraft steuernden Führung und zu einer erhöhten erforderlichen Leistungsstärke des Antriebes für die Einzugsbewegung der Klemmeinheit. Um das zu vermeiden, ist es erfindungsgemäß vorgesehen, dass die Blattfeder in dem zweiten Bereich mit einem zu der Karte weisendem Knick versehen ist, der in Richtung des Biegemoments an der Blattfeder verläuft. Der Knick steht in direktem Kontakt mit der zweiten Klemmeinheit oder unmittelbar mit der zu klemmenden Karte. Der Abstand zwischen dem Knick in der Blattfeder und dem geführten ersten Bereich der Blattfeder wirkt als ein die Auflagekraft in der Führung reduzierender Hebel. Als alternative Lösung zu dem Knick in der Blattfeder kann sich auf dem Klemmteil oben eine Prägung befinden. Diese dient als Auflagefläche für die Blattfeder.

Eine gesicherte Lage der beweglichen Teile der Vorrichtung ergibt sich, wenn mindestens ein Klemmelement auf die aufzunehmende Karte im Wesentlichen rotatorisch absenkbar ist und die Karte auf diese Weise klemmbar ist. In diesem Zusammenhang ist es zweckmäßig, wenn die aufzunehmende Karte mittels der Klemmelemente zangenartig geklemmt wird. In vorteilhafter Weise nutzt die Erfindung auf diese Weise die Hebelverhältnisse der zangenartigen Klemmung aus.

Für eine besonders gleichmäßige Belastung der Karte und einen über die gesamte Flachseite der Karte homogenen Verschleiß ist es sinnvoll, wenn eine Klemmelement auf die aufzunehmende Karte im Wesentlichen translatorisch absenkbar ist und die Karte auf diese Weise klemmbar ist. Die translatorische Absenkung hat daneben den Vorteil, dass die Karte keine bevorzugte Ausweichrichtung beim Klemmvorgang hat.

In weiterer Ausgestaltung der Erfindung ist es zweckmäßig, wenn die Kartenaufnahmevorrichtung zwei seitlich neben einem Kartenaufnahmeschacht befindliche Führungselemente aufweist, das elastische Element, beispielsweise eine Blattfeder, sich im Wesentlichen über die Breite des Kartenaufnahmeschachts erstreckt, das elastische Element mindestens zwei erste Bereiche aufweist und das elastische Element mit jeweils einem ersten Bereich an den seitlich angeordneten Führung jeweils geführt ist. Diese weitestgehend symmetrische Ausführung stellt eine stets gleichmäßige Krafteinleitung in die Karte sicher.

Für eine maximale Toleranz gegenüber Fehlbedienungen ist es sinnvoll, wenn die Führung derart ausgebildet ist, dass sich die Klemmkraft auf die Karte bei einer Bewegung in Einwärtsrichtung anfänglich erhöht. Die Erhöhung der Klemmkraft sollte eine möglichst steile Charakteristik aufweisen, damit der Schlupf der Karte in der Klemmeinheit auf eine minimale Länge reduziert ist. Der Einzug der Karte sollte mittels eines elektromotorischen Antriebs erfolgen, der die Klemmeinheit gemeinsam mit der Karte in Einwärtsrichtung der Aufnahmevorrichtung antreibt. Zweckmäßig braucht aufgrund der erfindungsgemäßen Führungen nur ein elektrischer Antrieb vorgesehen werden, da der Klemmvorgang mechanisch vorteilhaft an die Einwärtsbewegung der Klemmeinheit angekoppelt ist. Erst aufgrund der erfindungsgemäßen Klemmung ist es möglich, auf so flachem Bauraum eine Karte vollautomatisch und manipulationssicher in eine Kartenaufnahmevorrichtung vollständig einzuziehen.

Die erforderliche Manipulationssicherheit kann gewährleistet werden, wenn die Kartenaufnahmevorrichtung eine Einfuhröffnung mit einem Verschlusselement aufweist und die Einfuhröffnung mittels des Verschlusselements verschließbar ist. Den gesetzlichen Vorschriften zur Vermeidung von Manipulationen ist genüge getan, wenn eine Arretiereinheit das Verschlusselement in einer Geschlossen-Stellung arretiert.

Um eine Zerstörung des Antriebs, insbesondere infolge grober Fehlbedienung zu vermeiden, ist es sinnvoll, wenn zwischen dem Antrieb und der Klemmeinheit eine Rutschkupplung angeordnet ist.

Um eine Beschädigung der Vorrichtung aufgrund eines grob unachtsamen Einschiebens einer Karte zu vermeiden, ist es vorteilhaft wenn zwischen dem Antrieb für die Einwärtsbewegung der Klemmeinheit und der Klemmeinheit ein zweites elastisches Element angeordnet ist, welches Einwärtsbewegungen der Klemmeinheit aufgrund einer mittels einer Karte in die Klemmeinheit von außen eingeleiteten Kraft federnd aufnimmt. Auf diese Weise kann gegebenenfalls die erwähnte teurere Rutschkupplung entfallen.

Die Zuverlässigkeit der Klemmung wird erhöht, wenn die Klemmeinheit in Bereichen, welche die Karte berühren und klemmen zumindest teilweise mit Reibbelägen versehen ist. Alternativ ist es zweckmäßig, die Klemmflächen anzurauen, um so den Reibkoeffizient zu erhöhen und damit die Reibkraft zwischen Karte und Klemmeinheit.

Zur Lösung der erfindungsgemäße Aufgabe wird neben der Kartenaufnahmevorrichtung auch ein Verfahren zur Aufnahme einer Karte in eine Kartenaufnahmevorrichtung vorgeschlagen, bei welcher während eines ersten Bewegungsabschnitts die Karte zunächst durch eine Einführöffnung händisch eingeführt wird und an einer ersten Endposition an einen Anschlag einer Klemmeinheit gelangt, während eines zweiten Bewegungsabschnitts die Klemmeinheit mittels der Karte händisch in Einwärtsrichtung geschoben wird und die Führung einen zweiten Bereich eines mittelbar oder unmittelbar mittels der Führung an einem ersten Bereich geführten elastischen Elements mittelbar oder unmittelbar an die Karte drückt, und ein Sensor das Ende des zweiten Bewegungsabschnitts registriert, eingangs eines dritten Bewegungsabschnitts der Sensor die Ansteuerung eines Antrieb initiiert, welcher die Klemmeinheit in einer Einwärtsrichtung transportiert. Zweckmäßig ist hierbei die Klemmeinheit gegen das händische Schieben in Einwärtsrichtung mittels eines zweiten elastischen Elements vorgespannt, so dass der Benutzer sensorisch einen steigenden Widerstand wahrnimmt, bevor die Karte vollautomatisch eingezogen wird. Der Vorteil dieses Vorgehens liegt einerseits in der verbesserten Ergonomie und andererseits in der sicheren Anlage der Karte an dem hinteren Anschlag der Klemmeinheit, so dass nur noch geringe Korrekturen der Kartenpositionen erforderlich sind, um eine in der Endposition sichere Kontaktierung zu gewährleisten. Das einschubseitige Anliegen der Stirnseite der Karte an dem Anschlag der Klemmeinheit ist von besonderer Bedeutung, weil die Position der Kontaktgruppe der Karte von dieser Kante toleriert ist.

Für einen Benutzer wird die Bedienung etwas komfortabler, wenn während eines ersten Bewegungsabschnitts die Karte zunächst in eine Einführöffnung händisch eingeführt wird und an einer ersten Endposition von einem Sensor registriert wird, eingangs eines zweiten Bewegungsabschnitts der Sensor die Ansteuerung eines Antriebs initiiert, welcher die Klemmeinheit in eine Einwärtsrichtung transportiert währenddessen die Führung einen zweiten Bereich eines mittelbar oder unmittelbar mittels der Führung an einem ersten Bereich geführten elastischen Elements mittelbar oder unmittelbar an die Karte drückt. Sollte die Karte bei diesem Einzugsverfahren nicht vollständig an entsprechenden Anschlägen der Klemmeinheit anliegen, kann die Lage der Karte mittels anschließender Operationen in der Vorrichtung korrigiert werden. Dies kann beispielsweise mittels einer seitlich in der Einschubebene in die Einschuböffnung auf der Eingangsseite einfahrenden Verriegelung erfolgen, welche die Karte vorzugsweise federnd berührt und in eine Endlage schiebt, wobei zuvor die Klemmung zweckmäßig gelöst werden kann, so dass die Karte an entsprechende Anschläge gedrückt werden kann.

Zur Lösung der Aufgabe wird daneben ein Verfahren obiger Art vorgeschlagen, bei welchen während eines ersten Bewegungsabschnitts die Karte zunächst in eine Einführöffnung händisch eingeführt wird und an einer ersten Endposition von einem Sensor registriert wird, eine Führung in eine Einwärtsrichtung bewegbar ist und der Sensor die Ansteuerung eines Antriebs initiiert, welcher die Führung in Einwärtsrichtung bewegt und eine Klemmeinrichtung die Karte klemmt, in dem die Führung einen zweiten Bereich eines mittelbar oder unmittelbar mittels der Führung an einem ersten Bereich geführten elastischen Elements mittelbar oder unmittelbar an die Karte drückt, während eines dritten Bewegungsabschnitts die Klemmeinheit die Karte in Einwärtsrichtung transportiert.

Eine besonders sichere Kontaktierung der Karte zum Zweck der Datenübertragung wird erzielt, wenn die Klemmung während eines vierten Bewegungsabschnittes von der Karte zum Zweck der Feinpositionierung der Karte gelöst wird und die Karte zu einem Kontaktsatz feinpositioniert wird, so dass eine anschließende Phase der Datenübertragung fehlerfrei erfolgt. Zu diesem Zweck kann die Karte mit Vorteil mittels eines Feinpositionierelementes nach dem Lösen der Trennung in die Endposition, vorzugsweise an einem in der Endposition gehäuseseitig vorgesehenen Anschlag, transportiert werden. In weiterer Ausgestaltung erweist sich hierbei ein Feinpositionierelement als sinnvoll, welches die Karte an der eingangsseitigen Stirnseite oder an den sich an der eingangsseitigen Kante der Karte anschließenden Ecken oder Rundungen in Einwärtsrichtung an einen gehäuseseitigen, in der Endposition befindlichen, Anschlag drückt. Sinnvoll kann die Funktion des Feinpositionierelementes mit derjenigen einer Verriegelungseinheit kombiniert werden, die vorzugsweise zwei Verriegelungselemente aufweist, welche von beiden Seiten in die Aufnahmeöffnung der Vorrichtung einfahren, die bereits in dem Gehäuse befindliche Karte an den beiden eingangsseitigen Ecken berühren und in die Endposition drücken bzw. transportieren.

Im Folgenden ist die Erfindung zur Verdeutlichung unter Bezugnahme auf Zeichnungen näher beschrieben. Es zeigen:
- Fig. 1: eine perspektivische Darstellung einer Klemmeinheit,
- Fig. 2a, 2b, 3a, 3b, 4a, 4b, 5a, 5b: jeweils ein Längsschnitt durch eine erfindungsgemäße Klemmeinheit, mit angrenzenden Baugruppen in verschiedenen Phasen der Aufnahme der Karte jeweils nach dem in den Figuren 2c, 3c, 4c, 5c dargestellten Schnitt G - G bzw. F - F und
- Fig. 2c, 3c, 4c, 5c: jeweils eine erfindungsgemäße Klemmeinheit mit angrenzenden Baugruppen in einer Draufsicht.

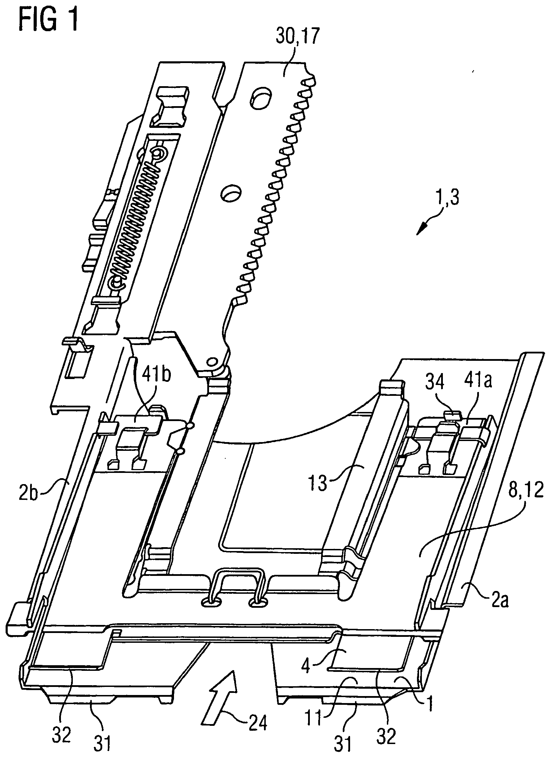

In Figur 1 ist eine Klemmeinheit 3 einer Kartenaufnahmevorrichtung 1 mit angrenzenden Baugruppen dargestellt. Wesentliche Bestandteile sind seitliche Auflager 2a, 2b, ein erstes Klemmelement 4, ein zweites Klemmelement 11, welche einen in einer Einschubebene 16 angeordneten Kartenaufnahmeschacht 15 umgeben, ein erstes elastisches Element 8 bzw. eine Blattfeder 12 und eine Zahnstange 30 eines Antriebs.

Wie auch in den Darstellungen der nachfolgenden Figuren gezeigt, ist die Klemmeinheit 3 relativ zu einem Grundträger 40 mittels der Auflager 2a, 2b in eine Einwärtsrichtung 24 entlang seitlich der Klemmeinheit 3 angeordneter Führungen 42a, 42b gleitgelagert linear verschiebbar.

Die Klemmeinheit greift die eingegebene Karte 5 zangenartig mittels des ersten Klemmelements 4 anliegend an einer ersten Flachseite 6 der Karte 5 und des zweiten Klemmelements 11 anliegend an einer zweiten Flachseite 7 der Karte 5.

Das erste Klemmelement 4 ist an der Klemmeinheit 3 in einer Drehachse 13 drehbar gelagert angebracht. Bei dieser Anbringung handelt es sich im Wesentlichen um ein Niederhalten mittels zweier Niederhalter 41a, 41b, die fester Bestandteil der Klemmeinheit 3 sind. Ebenfalls in der Drehachse 13 drehbar gelagert ist das erstes elastische Element 8 bzw. die Blattfeder 12, die auf gleiche Weise mittels der Niederhalter 41a, 41b an der Klemmeinheit 3 befestigt ist.

Die Blattfeder 12 weist einen in Einwärtsrichtung 24 eingangsseitig angeordneten ersten Bereich 9 und einen in Einwärtsrichtung 24 endseitig angeordneten zweiten Bereich 10 auf. In dem ersten Bereich 9 weist die Blattfeder 12 beidseitig des Einschubbereiches für die Karte 5 flügelartig hervorstehende Führungselemente 35a, 35b auf. Mittels der Führungselemente 35a, 35b ist der erste Bereich 9 in den Führungen 42a, 42b in der Weise geführt, dass eine Relativbewegung der Blattfeder 12 zu den Führungen 42a, 42b in Einwärtsrichtung 24 eine geführte Bewegung des ersten Bereichs 9 in Abstandsrichtung zu der aufzunehmenden Karte 5 zu folge hat. Die Führungen 42a, 42b haben somit eine Doppelfunktion, sie führen die Translationsbewegung der Klemmeinheit 3 in Einwärtsrichtung 24 und die in Abstandsrichtung zu der Karte 5, bzw. senkrecht zur Einschubebene 16 erfolgende Klemmbewegung des ersten Klemmelements 4, bzw. der Blattfeder 12. In dem zweiten Bereich 10 ist die Blattfeder 12 in der Drehachse 13 drehbar gelagert. In dem zweiten Bereich 10 ist die Blattfeder 12 mit einem in Richtung der aufzunehmenden Karte 5 bzw. dem zweiten Klemmelement 11 verlaufenen Knick 14 versehen, der mit dem Druck der Führungen 42a, 42b auf die Blattfeder 12 auf das zweite Klemmelement 11 drückt, welches an einer ersten Flachseite 6 der Karte 5 anliegt und diese im Zusammenwirken mit dem ersten Klemmelement 4 einklemmt.

Das zweite Klemmelement 11 der Klemmeinheit 3 ist einstückig ausgebildet mit den seitlichen Auflagern 2a, 2b, so dass das zweite Klemmelement 11 im Rahmen der Einzugsbewegung eine reine translatorische Bewegung entlang der seitlichen Führungen 42a, 42b vollzieht.

Das zweite Klemmelement 11 ist eingangsseitig mit Einführschrägen 31 versehen, so dass auch eine ungenau eingeführte Karte 5 zwischen das erste Klemmelement 4 und das zweite Klemmelement 11 gelangt. Ebenso ist das erste Klemmelement 4 mit Einführschrägen 32 versehen. In Verlängerung in Einwärtsrichtung 24 weist das erste Klemmelement 4 einen Fortsatz 33 auf, an dem die Zahnstange 30 mittels eines zweiten elastischen Elements 43 federnd linear gelagert ist. Der Federweg des zweiten elastischen Elements 43 ermöglicht ein Nachgeben der Klemmeinheit 3 in Einwärtsrichtung 24, wenn eine Karte 5 an einen in der Klemmeinheit 3 endseitig angeordneten Anschlag 34 geschoben wird.

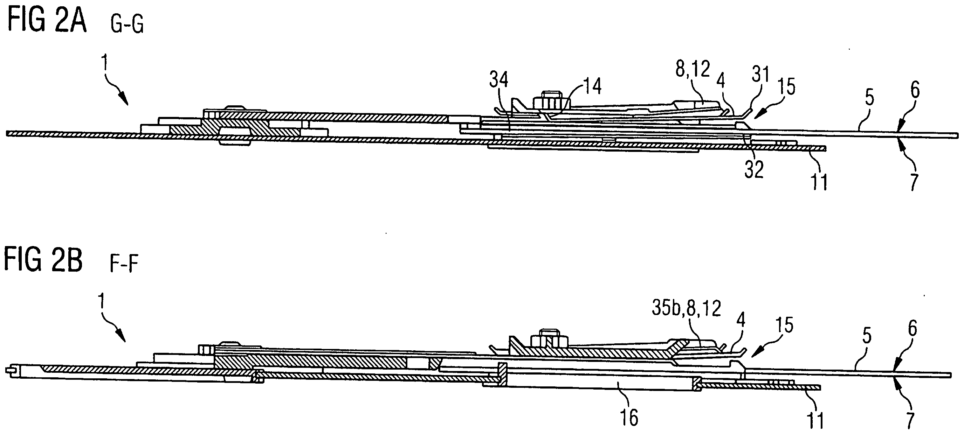

In den Figuren 2a bis 5c ist die Klemmeinheit 3 der Kartenaufnahmevorrichtung 1 mit angrenzenden Baugruppen in verschiedenen Phasen der Einwärtsbewegung der Karte 5 dargestellt.

Die Klemmeinheit 3 und die angrenzenden Baugruppen sind auf der Grundplatte 40 montiert, auf welcher verschiedene Aufnahmeelemente für einzelne Bauteile in Outserttechnik angespritzt sind. Insbesondere Führungselemente 16a, 16b zur gleitgelagerten an dem Grundträger 40 geführten Bewegung der Klemmeinheit 3 sind in Outserttechnik an dem Grundträger 40 angebracht.

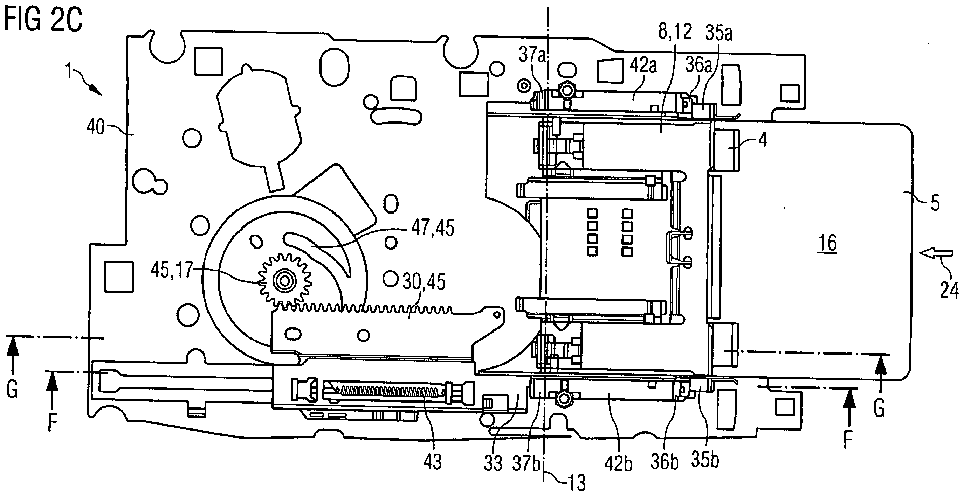

Figuren 2a, 2b, 2c zeigen die Anordnung bei bis zu einem in Einwärtsrichtung 24 endseitig befindlichem Anschlag 34 eingeschobener Karte 5. Die in Einwärtsrichtung 24 eingangsseitig auf beiden Seiten in einem ersten Bereich 9 mit Führungsflügeln 35a, 35b versehene Blattfeder 12 unterliegt in dieser Bewegungsphase noch keiner Biegebelastung. Die Führungen 42a, 42b sind jeweils mit einer Einlaufschräge 36a, 36b versehen und einer Auslaufschräge 37a, 37b für die Führungselemente 35a, 35b der Blattfeder 12. Die Führungselemente 35a, 35b der Blattfeder 12 berühren die Einlaufschrägen 36a, 36b. Ein Getriebe 45 umfasst unter anderem die Zahnstange 30, ein Antriebszahnrad 17, eine Führungskulisse 47 und weitere getriebliche Bauelemente.

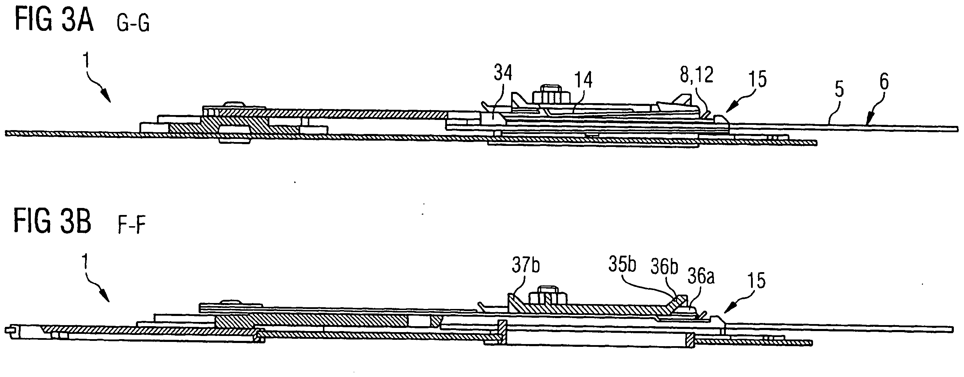

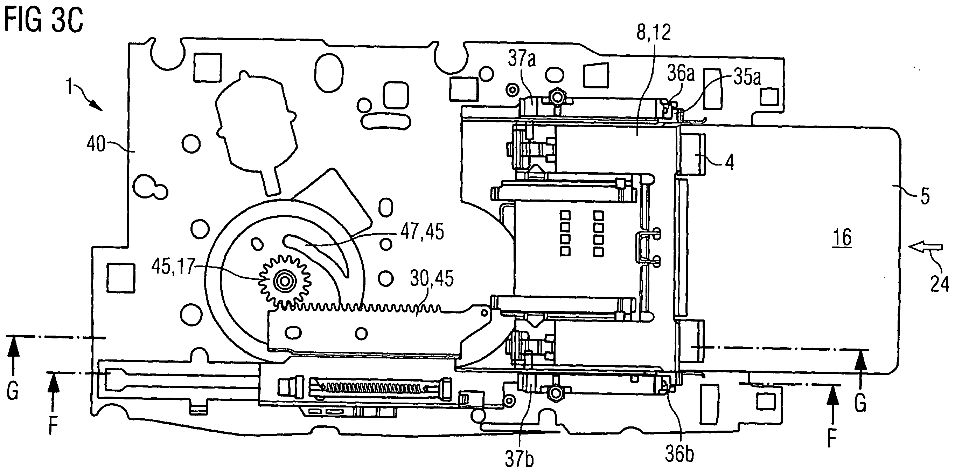

In der in den Figuren 3a, 3b, 3c dargestellten Bewegungsphase ist die Klemmeinheit 3 mittels der Karte 5 händisch in Einwärtsrichtung 24 verschoben. Hierbei geraten die beidseitig der Blattfeder 12 angeordneten Führungselemente 35a, 35b entlang der Einlaufschrägen 36a, 36b unter die Führung 42a, 42b, so dass die Blattfeder 12 in Abstandsrichtung zu der eingeführten Karte 5 gedrückt wird. Der Knick 14 drückt das erste Klemmelement 4 auf die Karte 5. Ein händisches Weiterschieben der Karte erfolgt gegen den sensorisch wahrnehmbaren Widerstand des zweiten elastischen Elements 43, das eine Beschädigung der angeschlossenen getrieblichen Bauelemente verhindert.

Nach Einführen und Klemmen der Karte 5 registriert ein nicht dargestellter Sensor die Anwesenheit der Karte 5 und ein nicht dargestellter Antrieb beginnt mit dem Einzug der Klemmeinheit 3 in Einwärtsrichtung 24 mittels des Getriebes 45.

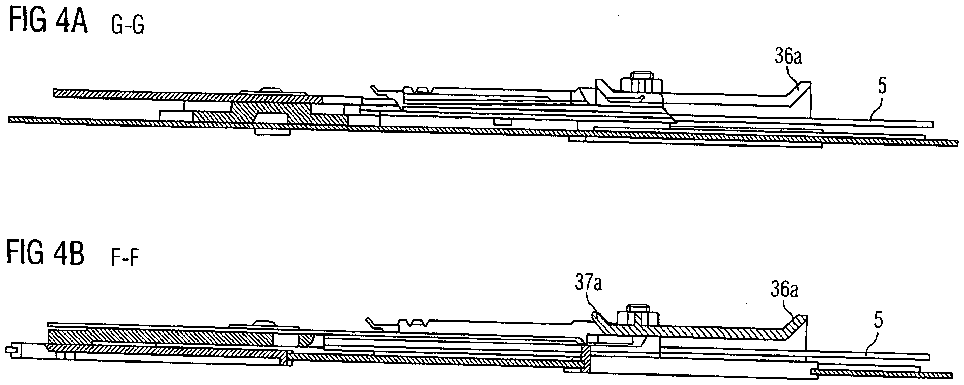

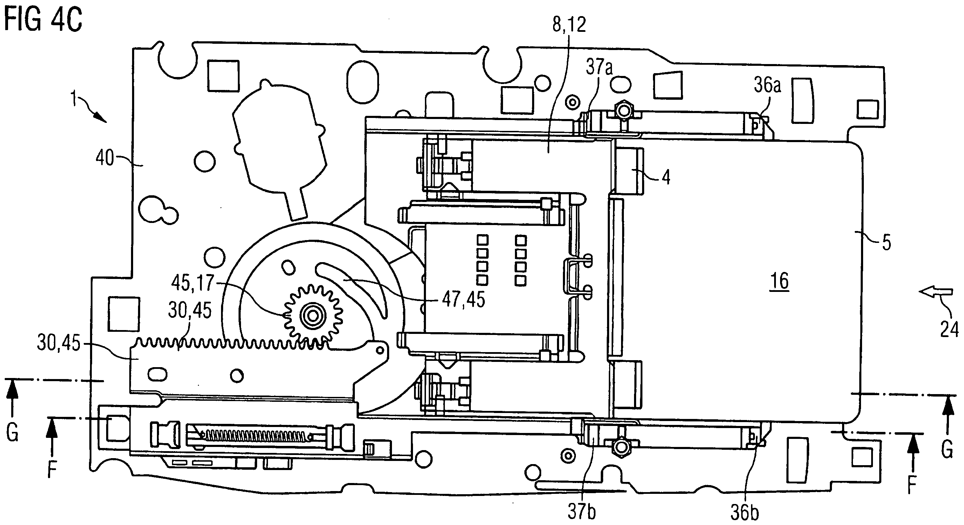

In der in den Figuren 4a, 4b, 4c dargestellten Bewegungsphase ist der Einzug der Karte 5 nahezu abgeschlossen. Die Klemmung der Karte 5 steht kurz vor der Lösung.

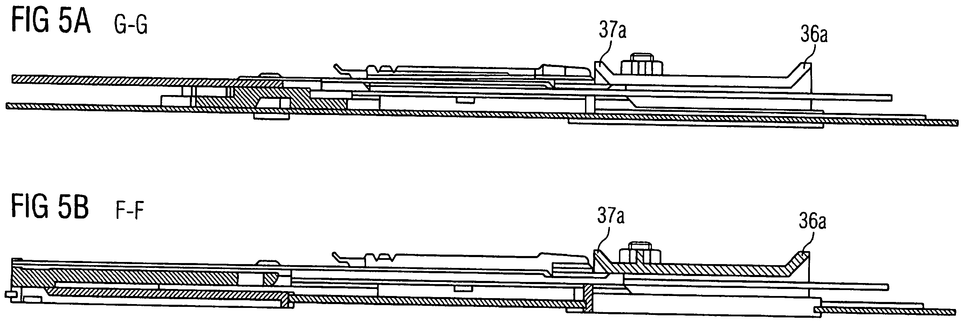

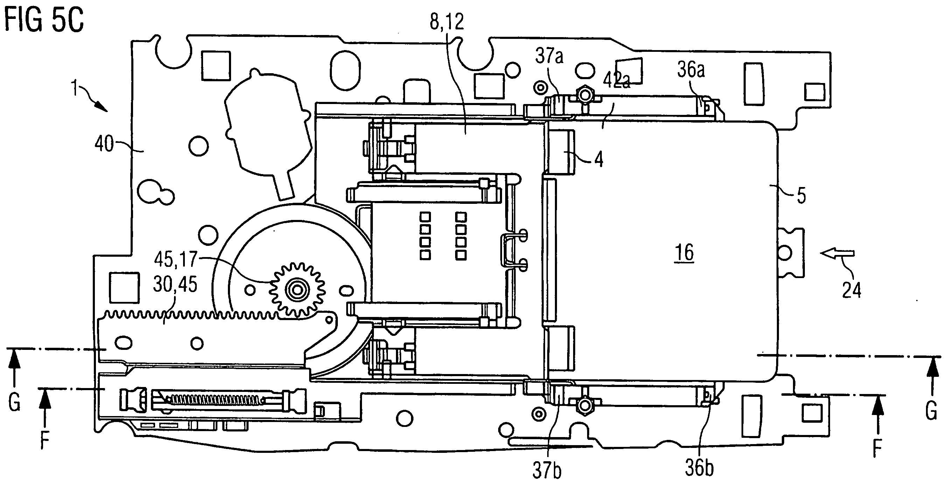

In der in den Figuren 5a, 5b, 5c dargestellten Bewegungsphase ist die Karte 5 vollständig in die Vorrichtung eingezogen und die Führungselemente 35a, 35b der Blattfeder 12 laufen jeweils entlang einer Auslaufschräge 37a, 37b, so dass die Klemmung der Karte 5 mittels der Blattfeder 12 und des zweiten Klemmelements 11 aufgelöst ist. In einem nicht dargestellten anschließenden Arbeitsschritt kann eine Feinpositionierung der Karte 5 mittels geeigneter Schubelemente in der Vorrichtung erfolgen.

## Patentansprüche

1. Kartenaufnahmevorrichtung (1) mit mindestens einer Führung (42a, 42b) und mit einer Klemmeinheit (3) mit mindestens einem ersten Klemmelement (4), welche Klemmeinheit (3) eine aufzunehmende Karte (5) mit zwei sich gegenüberliegenden Flachseiten (6, 7) an einer Flachseite (6) bei einer Relativbewegung der Klemmeinheit (3) zu der mindestens einen Führung (42a, 42b) von der mindesten einen Führung (42a, 42b) gesteuert klemmt, wobei die Klemmeinheit (3) mindestens ein erstes elastisches Element (8) mit einem ersten Bereich und einem zweiten Bereich aufweist, welches mittelbar oder unmittelbar an dem mindestens ersten Bereich mittels der mindestens einen Führung (42a, 42b) geführt ist und mittelbar oder unmittelbar die Karte (5) mittels des mindestens einen zweiten Bereichs klemmt, **dadurch gekennzeichnet, dass** die Kartenaufnahmevorrichtung (1) einen elektromotorischen Antrieb aufweist und die Einwärtsbewegung der Karte (5) zumindest teilweise mittels des Antriebs antreibbar ist, mindestens ein Klemmelement (4) um eine Drehachse (13) drehbar gelagert ist und die aufzunehmende Karte (5) mittels der Klemmelemente (4, 11) zangenartig klemmbar ist.

2. Kartenaufnahmevorrichtung (1) nach Anspruch 1, **da-** durch **gekennzeichnet,** dass das erste elastische Element (8) als Teil des ersten Klemmelements (11) ausgebildet ist und mit einem ersten Bereich mittels der mindestens einen Führung (42a, 42b) geführt ist und die Karte (5) mittels eines zweiten Bereichs in Zusammenwirken mit dem ersten Klemmelement (4) klemmt.

3. Kartenaufnahmevorrichtung (1) nach Anspruch 1, **da-durch gekennzeichnet,** dass die Klemmeinheit (3) mindestens ein zweites Klemmelement (11) aufweist, der zweite Bereich des elastischen Elements (8) das erste Klemmelement (4) berührt und während des Klemmvorgangs so gegen die Karte (5) drückt, dass das erste Klemmelement (4) gemeinsam mit dem zweiten Klemmelement (11) eine aufzunehmende Karte (5) an den zwei gegenüberliegenden Flachseiten (6, 7) klemmt.

4. Kartenaufnahmevorrichtung (1) nach mindestens einem der vorhergehenden Ansprüche, **dadurch gekennzeichnet, dass** bei einer Bewegung der Klemmeinheit (3) in eine Einwärtsrichtung (24) der Kartenaufnahmevorrichtung (1), die Klemmeinheit (3) die Karte (5) gesteuert von der mindestens einen Führung (42a, 42b) klemmt.

5. Kartenaufnahmevorrichtung (1) nach mindestens einem der vorhergehenden Ansprüche, **dadurch gekennzeichnet, dass** das elastische Element eine Blattfeder (12) ist.

6. Kartenaufnahmevorrichtung (1) nach Anspruch 5, **dadurch gekennzeichnet, dass** die Blattfeder (12) an einem Ende in einer Drehachse (13) drehbar gelagert ist, der erste Bereich, an dem die Blattfeder (12) mittels der mindestens einen Führung (42a, 42b) geführt ist, an dem gegenüber liegenden Ende angeordnet ist und der zweite Bereich nahe der Drehachse (13) angeordnet ist.

7. Kartenaufnahmevorrichtung (1) nach Anspruch 6, **dadurch gekennzeichnet, dass** die Blattfeder (12) im zweiten Bereich einen zur Karte (5) weisenden in Richtung des Biegemoments an der Blattfeder (12) verlaufenden Knick (14) aufweist.

8. Kartenaufnahmevorrichtung (1) nach mindestens einem der vorhergehenden Ansprüche, **dadurch gekennzeichnet, dass** mindestens ein Klemmelement (4) auf die aufzunehmende Karte (5) im Wesentlichen rotatorisch absenkbar ist und die Karte (5) auf diese Weise klemmbar ist.

9. Kartenaufnahmevorrichtung (1) nach mindestens einem der vorhergehenden Ansprüche, **dadurch gekennzeichnet, dass** mindestens ein Klemmelement (4) auf die aufzunehmende Karte (5) im Wesentlichen translatorisch absenkbar ist und die Karte (5) auf diese Weise klemmbar ist.

10. Kartenaufnahmevorrichtung (1) nach mindestens einem der vorhergehenden Ansprüche, **dadurch gekennzeichnet, dass** die Kartenaufnahmevorrichtung (1) zwei seitlich neben einem Kartenaufnahmeschacht (15) befindliche Führungen (42a, 42b) aufweist, das elastische Element (8) sich im Wesentlichen über die Breite des Kartenaufnahmeschachts (15) erstreckt, das elastische Element (8) mindestens zwei seitlich angeordnete Führungselemente (35a, 35b) im ersten Bereich aufweist und das elastische Element (8) mittels jeweils einem Führungselement (35a, 35b) an den seitlich angeordneten Führungen (42a, 42b) jeweils geführt ist.

11. Kartenaufnahmevorrichtung (1) nach mindestens einem der vorhergehenden Ansprüche, **dadurch gekennzeichnet, dass** die Führung (42a, 42b) derart ausgebildet ist, dass sich die Klemmkraft auf die Karte (5) bei einer Bewegung der Karte (5) in Einwärtsrichtung (24) anfänglich erhöht.

12. Kartenaufnahmevorrichtung (1) nach mindestens einem der vorhergehenden Ansprüche, **dadurch gekennzeichnet, dass** die Karte (5) in die Kartenaufnahmevorrichtung (1) vollständig einziehbar ist.

13. Kartenaufnahmevorrichtung (1) nach Anspruch 12, **dadurch gekennzeichnet, dass** die Kartenaufnahmevorrichtung (1) eine Einführöffnung und ein Verschlusselement aufweist und die Einführöffnung mittels des Verschlusselements verschließbar ist.

14. Kartenaufnahmevorrichtung (1) nach Anspruch 13, **dadurch gekennzeichnet, dass** die Kartenaufnahmevorrichtung (1) mindestens eine Arretiereinheit aufweist und das Verschlusselement in einer Geschlossen-Stellung mittels einer Arretiereinheit arretierbar ist.

15. Kartenaufnahmevorrichtung (1) nach mindestens einem der vorhergehenden Ansprüche, **dadurch gekennzeichnet, dass** zwischen dem Antrieb und der Klemmeinheit (3) eine Rutschkupplung angeordnet ist.

16. Kartenaufnahmevorrichtung (1) nach mindestens einem der vorhergehenden Ansprüche, **dadurch gekennzeichnet, dass** die Klemmeinheit (3) in Bereichen, welche die Karte (5) berühren und klemmen zumindest teilweise mit Reibbelägen versehen ist.

17. Verfahren zur Aufnahme einer Karte (5) in eine Kartenaufnahmevorrichtung nach mindestens einem der vorhergehenden Ansprüche, **dadurch gekennzeich**n e t , dass
- während eines ersten Bewegungsabschnitts die Karte (5) zunächst durch eine Einführöffnung händisch eingeführt wird und an einer ersten Endposition an einen Anschlag (34) einer Klemmeinheit (3) gelangt,
- während eines zweiten Bewegungsabschnitts die Klemmeinheit (3) mittels der Karte (5) händisch in Einwärtsrichtung (24) geschoben wird und eine Führung (42a, 42b) einen zweiten Bereich eines mittelbar oder unmittelbar mittels der Führung (42a, 42b) an einem ersten Bereich geführten elastischen Elements (8) mittelbar oder unmittelbar an die Karte (5) drückt, und ein Sensor das Ende des zweiten Bewegungsabschnitts registriert,
- eingangs eines dritten Bewegungsabschnitts der Sensor die Ansteuerung eines Antriebs initiiert, welcher die Klemmeinheit (3) in eine Einwärtsrichtung (24) transportiert.

18. Verfahren zur Aufnahme einer Karte (5) in eine Kartenaufnahmevorrichtung nach mindestens einem der Ansprüche 1 bis 16, **dadurch gekennzeichnet, dass**
- während eines ersten Bewegungsabschnitts die Karte (5) zunächst in eine Einführöffnung händisch eingeführt wird und an einer ersten Endposition von einem Sensor registriert wird,
- eingangs eines zweiten Bewegungsabschnitts der Sensor die Ansteuerung eines Antriebs initiiert, welcher die Klemmeinheit (3) in eine Einwärtsrichtung (24) transportiert
- währenddessen eine Führung (42a, 42b) einen zweiten Bereich eines mittelbar oder unmittelbar mittels der Führung (42a, 42b) an einem ersten Bereich geführten elastischen Elements (8) mittelbar oder unmittelbar an die Karte (5) drückt.

19. Verfahren zur Aufnahme einer Karte (5) in eine Kartenaufnahmevorrichtung nach mindestens einem der Ansprüche 1 bis 16, **dadurch gekennzeichnet, dass**
- während eines ersten Bewegungsabschnitts die Karte (5) zunächst in eine Einführöffnung händisch eingeführt wird und an einer ersten Endposition von einem Sensor registriert wird,
- eine Führung (42a, 42b) in eine Einwärtsrichtung (24) bewegbar ist und der Sensor die Ansteuerung eines Antriebs initiiert, welcher die Führung (42a, 42b) in Einwärtsrichtung bewegt und eine Klemmeinheit (3) die Karte (5) klemmt, indem die Führung (42a, 42b) einen zweiten Bereich eines mittelbar oder unmittelbar mittels der Führung (42a, 42b) an einem ersten Bereich geführten elastischen Elements (8) mittelbar oder unmittelbar an die Karte (5) drückt,
- während eines dritten Bewegungsabschnitts die Klemmeinheit (3) die Karte (5) in Einwärtsrichtung (24) transportiert.

20. Verfahren nach mindestens einem der Ansprüche 18 oder 19, **dadurch gekennzeichnet, dass** während eines vierten Bewegungsabschnittes die Klemmung an der Karte (5) gelöst wird und die Karte (5) zu einem Kontaktsatz feinpositioniert wird.

21. Verfahren nach Anspruch 20, **dadurch gekennzeichnet, dass** die Karte (5) mittels eines Feinpositionierelementes nach Lösen der Klemmung an der eingangsseitigen Stirnseite oder den eingangsseitigen Ecken der Karte (5) in Einwärtsrichtung (24) an einen gehäuseseitigen Anschlag der Endposition gedrückt wird.

## Claims

1. Card holding device (1) having at least one guide (42a, 42b) and having a clamping unit (3) with at least one first clamping element (4), which clamping unit (3) clamps a card (5), which is to be held and has two mutually opposite flat faces (6, 7), on one flat face (6) in a manner controlled by the at least one guide (42a, 42b) when the clamping unit (3) moves in relation to the at least one guide (42a, 42b), in which case the clamping unit (3) has at least one first elastic element (8) with a first region and a second region, which element is guided indirectly or directly at the at least first region by means of the at least one guide (42a, 42b), and clamps the card (5) indirectly or directly by means of the at least one second region, **characterized in that** the card holding device (1) has an electric motor drive and the inward movement of the card (5) can be driven at least partly by means of the drive, at least one clamping element (4) is rotatably mounted about a rotation axis (13), and the card (5), which is to be held, can be clamped in the manner of tongs by means of the clamping elements (4, 11).

2. Card holding device (1) according to Claim 1, **characterized in that** the first elastic element (8) is part of the first clamping element (11) and is guided with a first region by means of the at least one guide (42a, 42b) and, by interacting with the first clamping element (4), clamps the card (5) by means of a second region.

3. Card holding device (1) according to Claim 1, **characterized in that** the clamping unit (3) has at least one second clamping element (11), the second region of the elastic element (8) touches the first clamping element (4) and, during the clamping process, presses against the card (5) in such a way that the first clamping element (4) and the second clamping element (11) clamp a card (5), which is to be held, on the two opposite flat faces (6, 7).

4. Card holding device (1) according to at least one of the preceding claims, **characterized in that** the clamping unit (3) clamps the card (5) in a manner controlled by the at least one guide (42a, 42b) when the clamping unit (3) moves in an inward direction (24) of the card holding device (1).

5. Card holding device (1) according to at least one of the preceding claims, **characterized in that** the elastic element is a leaf spring (12).

6. Card holding device (1) according to Claim 5, **characterized in that** one end of the leaf spring (12) is rotatably mounted in a rotation axis (13), the first region, at which the leaf spring (12) is guided by means of the at least one guide (42a, 42b), is arranged at the opposite end, and the second region is arranged close to the rotation axis (13).

7. Card holding device (1) according to Claim 6, **characterized in that** the leaf spring (12) has, in the second region, a bend (14) which faces the card (5) and runs in the direction of the bending moment on the leaf spring (12).

8. Card holding device (1) according to at least one of the preceding claims, **characterized in that** at least one clamping element (4) can be lowered onto the card (5), which is to be held, in a substantially rotatory manner, and the card (5) can be clamped in this way.

9. Card holding device (1) according to at least one of the preceding claims, **characterized in that** at least one clamping element (4) can be lowered onto the card (5), which is to be held, in a substantially translatory manner, and the card (5) can be clamped in this way.

10. Card holding device (1) according to at least one of the preceding claims, **characterized in that** the card holding device (1) has two guides (42a, 42b) which are located at the side of a card holding shaft (15), the elastic element (8) extends substantially over the width of the card holding shaft (15), the elastic element (8) has at least two guide elements (35a, 35b) which are arranged at the side in the first region, and the elastic element (8) is respectively guided by means of a respective guide element (35a, 35b) on the guides (42a, 42b) which are arranged at the side.

11. Card holding device (1) according to at least one of the preceding claims, **characterized in that** the guide (42a, 42b) is formed in such a way that the clamping force on the card (5) initially increases when the card (5) moves in the inward direction (24).

12. Card holding device (1) according to at least one of the preceding claims, **characterized in that** the card (5) can be completely drawn into the card holding device (1).

13. Card holding device (1) according to Claim 12, **characterized in that** the card holding device (1) has an insertion opening and a closure element, and the insertion opening can be closed by means of the closure element.

14. Card holding device (1) according to Claim 13, **characterized in that** the card holding device (1) has at least one locking unit, and the closure element can be locked in a closed position by means of a locking unit.

15. Card holding device (1) according to at least one of the preceding claims, **characterized in that** a slip clutch is arranged between the drive and the clamping unit (3).

16. Card holding device (1) according to at least one of the preceding claims, **characterized in that** the clamping unit (3) is at least partly provided with friction linings in regions which touch and clamp the card (5).

17. Method for holding a card (5) in a card holding device according to at least one of the preceding claims, **characterized in that**
- during a first period of movement the card (5) is first of all manually inserted through an insertion opening and at a first end position reaches a stop (34) of a clamping unit (3),
- during a second period of movement the clamping unit (3) is manually pushed in the inward direction (24) by means of the card (5) and a guide (42a, 42b) presses a second region of an elastic element (8), which is guided indirectly or directly by means of the guide (42a, 42b) at a first region, indirectly or directly against the card (5), and a sensor registers the end of the second period of movement,
- at the beginning of a third period of movement the sensor initiates activation of a drive which transports the clamping unit (3) in an inward direction (24).

18. Method for holding a card (5) in a card holding device according to at least one of Claims 1 to 16, **characterized in that**
- during a first period of movement the card (5) is first of all manually inserted into an insertion opening and registered by a sensor at a first end position,
- at the beginning of a second period of movement the sensor initiates activation of a drive which transports the clamping unit (3) in an inward direction (24)
- while a guide (42a, 42b) presses a second region of an elastic element (8), which is guided indirectly or directly by means of the guide (42a, 42b) at a first region, indirectly or directly against the card (5).

19. Method for holding a card (5) in a card holding device according to at least one of Claims 1 to 16, **characterized in that**
- during a first period of movement the card (5) is first of all manually inserted into an insertion opening and registered by a sensor at a first end position,
- a guide (42a, 42b) can be moved in an inward direction (24) and the sensor initiates activation of a drive which moves the guide (42a, 42b) in the inward direction, and a clamping unit (3) clamps the card (5) by the guide (42a, 42b) pressing a second region of an elastic element (8), which is indirectly or directly guided at a first region by means of the guide (42a, 42b), indirectly or directly against the card (5),
- during a third period of movement the clamping unit (3) transports the card (5) in the inward direction (24).

20. Method according to at least one of Claims 18 or 19, **characterized in that** during a fourth period of movement the clamping action on the card (5) is released and the card (5) is finely positioned in relation to a contact set.

21. Method according to Claim 20, **characterized in that** the card (5) is pressed in the inward direction (24) against a housing-end stop of the end position by means of a finepositioning element after the clamping action on the input-end end face or on the input-end corners of the card (5) is released.

## Revendications

1. Dispositif de réception de carte (1) comportant au moins un dispositif de guidage (42a, 42b) et une unité de serrage (3) ayant au moins un premier élément de serrage (4), laquelle unité de serrage (3) serre de manière commandée par ledit au moins un dispositif de guidage (42a, 42b) une carte devant être reçue (5) au moyen de deux faces planes (6, 7) opposées l'une à l'autre sur une face plane (6) lors d'un mouvement relatif de l'unité de serrage (3) par rapport à l'au moins un dispositif de guidage (42a, 42b), dans lequel l'unité de serrage (3) comporte au moins un premier élément élastique (8) ayant une première zone et une deuxième zone, qui est guidé directement ou indirectement sur ladite au moins une première zone au moyen dudit au moins un dispositif de guidage (42a, 42b) et serre directement ou indirectement la carte (5) au moyen de ladite au moins une deuxième zone, **caractérisé en ce que** le dispositif de réception de carte (1) comporte un dispositif d'entraînement à moteur électrique et le mouvement vers l'intérieur de la carte (5) peut être entraîné au moins partiellement au moyen du dispositif d'entraînement, au moins un élément de serrage (4) est monté tournant autour d'un axe de rotation (13) et la carte devant être reçue (5) peut être serrée par pincement au moyen des éléments de serrage (4, 11).

2. Dispositif de réception de carte (1) selon la revendication 1, **caractérisé en ce que** le premier élément élastique (8) est réalisé en tant que partie du premier élément de serrage (11) et est guidé au moyen de l'au moins un dispositif de guidage (42a, 42b) à l'aide d'une première zone et serre la carte (5) au moyen d'une deuxième zone en coopération avec le premier élément de serrage (4).

3. Dispositif de réception de carte (1) selon la revendication 1, **caractérisé en ce que** l'unité de serrage (3) comporte au moins un deuxième élément de serrage (11), **en ce que** la deuxième zone de l'élément élastique (8) est en contact avec le premier élément de serrage (4) et appuie sur la carte (5) pendant le processus de serrage de manière à ce que le premier élément de serrage (4) serre une carte devant être reçue (5) sur les deuxièmes faces planes opposées (6, 7) en commun avec le deuxième élément de serrage (11).

4. Dispositif de réception de carte (1) selon au moins l'une des revendications précédentes, **caractérisé en ce que**, lors d'un mouvement de l'unité de serrage (3) dans une direction orientée vers l'intérieur (24) du dispositif de réception de carte (1), l'unité de serrage (3) serre la carte (5) de manière commandée par ledit au moins un dispositif de guidage (42a, 42b).

5. Dispositif de réception de carte (1) selon au moins l'une des revendications précédentes, **caractérisé en ce que** l'élément élastique est un ressort à lame (12).

6. Dispositif de réception de carte (1) selon la revendication 5, **caractérisé en ce que** le ressort à lame (12) est monté tournant à une extrémité, dans un axe de rotation (13), **en ce que** la première zone sur laquelle le ressort à lame (12) est guidé au moyen dudit au moins un dispositif de guidage (42a, 42b) est disposé sur l'extrémité opposée, et **en ce que** la deuxième zone est disposée à proximité de l'axe de rotation (13).

7. Dispositif de réception de carte (1) selon la revendication 6, **caractérisé en ce que** le ressort à lame (12) présente dans la deuxième zone un coude (14) s'étendant sur le ressort à lame (12) dans la direction du moment de flexion qui est tournée vers la carte (5).

8. Dispositif de réception de carte (1) selon au moins l'une des revendications précédentes, **caractérisé en ce qu'**au moins un élément de serrage (4) peut être abaissé de manière sensiblement tournante sur la carte devant être reçue (5) et **en ce que** la carte (5) peut ainsi être serrée.

9. Dispositif de réception de carte (1) selon au moins l'une des revendications précédentes, **caractérisé en ce qu'**au moins un élément de serrage (4) peut être abaissé sensiblement en translation sur la carte devant être reçue (5) et **en ce que** la carte (5) peut être ainsi errée.

10. Dispositif de réception de carte (1) selon au moins l'une des revendications précédentes, **caractérisé en ce que** le dispositif de réception de carte (1) comporte deux dispositifs de guidage (42a, 42b) disposés latéralement de manière adjacente à un étui de réception de carte (15), **en ce que** l'élément élastique (8) s'étend sensiblement sur toute la largeur de l'étui de réception de carte (15), **en ce que** l'élément élastique (8) comporte au moins deux éléments de guidage (35a, 35b) disposés latéralement dans la première zone et **en ce que** l'élément élastique (8) est respectivement guidé au moyen d'un élément de guidage respectif (35a, 35b) sur les dispositifs de guidage (42a, 42b) disposés latéralement.

11. Dispositif de réception de carte (1) selon au moins l'une des revendications précédentes, **caractérisé en ce que** le dispositif de guidage (42a, 42b) est réalisé de manière à ce que la force de serrage exercée sur la carte (5) augmente initialement lors d'un mouvement de la carte (5) dans une direction orientée vers l'intérieur (24).

12. Dispositif de réception de carte (1) selon au moins l'une des revendications précédentes, **caractérisé en ce que** la carte (5) peut être entièrement insérée dans le dispositif de réception de carte (1).

13. Dispositif de réception de carte (1) selon la revendication 12, **caractérisé en ce que** le dispositif de réception de carte (1) comporte une ouverture d'insertion et un élément de fermeture et **en ce que** l'ouverture d'insertion peut être fermée au moyen de l'élément de fermeture.

14. Dispositif de réception de carte (1) selon la revendication 13, **caractérisé en ce que** le dispositif de réception de carte (1) comporte au moins une unité de blocage et **en ce que** l'élément de fermeture peut être bloqué en position fermée au moyen d'une unité de blocage.

15. Dispositif de réception de carte (1) selon au moins l'une des revendications précédentes, **caractérisé en ce qu'**un embrayage à friction est disposé entre le dispositif d'entraînement et l'unité de serrage (3).

16. Dispositif de réception de carte (1) selon au moins l'une des revendications précédentes, **caractérisé en ce que** l'unité de serrage (3) est prévue dans des zones qui sont en contact avec la carte (5) et qui serrent celle-ci au moins partiellement au moyen de garnitures de friction.

17. Procédé de réception d'une carte (5) dans une dispositif de réception de carte selon au moins l'une des revendications précédentes, **caractérisé en ce que**,
- pendant une première partie du mouvement, la carte (5) est tout d'abord introduite à la main à travers une ouverture d'entrée et atteint une première position d'extrémité au niveau d'une butée (34) d'une unité de serrage (3),
- pendant une deuxième partie du mouvement, l'unité de serrage (3) est décalée à la main dans une direction orientée vers l'intérieur (24) au moyen de la carte (5) et un dispositif de guidage (42a, 42b) comprime indirectement ou directement sur la carte (5) une deuxième zone d'un élément élastique (8) guidé indirectement ou directement sur une première zone au moyen du dispositif de guidage (42a, 42b), et un capteur enregistre l'extrémité de la deuxième partie de mouvement,
- au début d'une troisième partie du mouvement, le capteur déclenche la commande d'un dispositif d'entraînement qui transporte l'unité de serrage (3) dans une direction orientée vers l'intérieur (24).

18. Procédé de réception d'une carte (5) dans une dispositif de réception de carte selon au moins l'une des revendications 1 à 16, **caractérisé en ce que**,
- pendant une première partie du mouvement, la carte (5) est tout d'abord introduite à la main dans une ouverture d'introduction et est enregistrée au niveau d'une première position d'extrémité par un capteur,
- au début d'une deuxième partie du mouvement, le capteur déclenche la commande d'un dispositif d'entraînement qui transporte l'unité de serrage (3) dans une direction orientée vers l'intérieur (24),
- pendant cela, un dispositif de guidage (42a, 42b) comprime indirectement ou directement sur la carte (5) une deuxième zone d'un élément élastique (8) guidé indirectement ou directement sur une première zone au moyen du dispositif de guidage (42a, 42b).

19. Procédé de réception d'une carte (5) dans une dispositif de réception de carte selon au moins l'une des revendications 1 à 16, **caractérisé en ce que**,
- pendant une première partie du mouvement, la carte (5) est tout d'abord introduite à la main dans une ouverture d'introduction et est enregistrée au niveau d'une première position d'extrémité par un capteur,
- un dispositif de guidage (42a, 42b) est mobile dans une direction orientée vers l'intérieur (24) et le capteur déclenche la commande d'un dispositif d'entraînement qui déplace le dispositif de guidage (42a, 42b) dans une direction orientée vers l'intérieur et une unité de serrage (3) serre la carte (5) en faisant en sorte que le dispositif de guidage (42a, 42b) comprime indirectement ou directement sur la carte (5) une deuxième zone d'un élément élastique (8) guidé indirectement ou directement sur une première zone au moyen du dispositif de guidage (42a, 42b),
- pendant une troisième partie du mouvement, l'unité de serrage (3) transporte la carte (5) dans une direction orientée vers l'intérieur (24).

20. Procédé selon au moins l'une des revendications 18 ou 19, **caractérisé en ce que**, pendant une quatrième partie du mouvement, le serrage de la carte (5) est interrompu et la carte (5) est positionnée de manière précise par rapport à un jeu de contacts.

21. Procédé selon la revendication 20, **caractérisé en ce que** la carte (5) est comprimée sur une butée côté boîtier de la position d'extrémité au moyen d'un élément de positionnement précis après interruption du serrage sur la face avant côté entrée ou sur l'arête côté entrée de la carte (5) dans une direction orientée vers l'intérieur (24).
